# FASCICULE DE BREVET EUROPEEN

(11) **EP 1 666 832 B1**
(45) Date de publication et mention de la délivrance du brevet: **29.08.2012**
(21) Numéro de dépôt: 04106226.6
(22) Date de dépôt: 01.12.2004
(51) Int. Cl.: G01B 5/012

(54) **Tête de mesure orientable motorisée**
Motorisierter orientierbarer Messkopf
Motorised orientable measuring head

(43) Date de publication de la demande: 07.06.2006
(73) Titulaire: TESA SA, 1020 Renens (CH)
(72) Inventeur: Rouge, Claude, 1446, Baulmes (CH); Jordil, Pascal, 1612, Ecoteaux (CH)
(74) Mandataire: P&TS SA (AG, Ltd.)

(56) Documents cités:
- EP-A- 0 392 660
- GB-A- 2 298 488
- US-A1- 2004 149 057
- US-B1- 6 170 358

## Description

### Domaine technique

La présente invention concerne une tête de mesure orientable pour mesurer des coordonnées tridimensionnelles d'une pièce mécanique et notamment, mais pas uniquement, une tête de mesure orientable destinée à être utilisé sur une machine à mesurer des coordonnées manuelle ou automatique.

### Etat de la technique

Les palpeurs à déclenchement sont des instruments de mesure utilisés par exemple sur des lignes de production de pièces mécaniques, pour la vérification desdimensions ou des surfaces des pièces usinées. Les palpeurs à déclenchement sont aussi utilisés pour capturer la forme tridimensionnelle de pièces complexes, afin par exemple de les reproduire ou de les modéliser.

En général les palpeurs comprennent une tête de mesure, destinée à être fixée sur un bras d'une machine à mesurer et une touche mobile, comprenant une sphère au bout d'une tige allongée et destinée à être amenée en contact avec la pièce à mesurer.

Dans la plupart des applications les palpeurs à déclenchement sont fixés sur le bras mobile d'une machine dont la position dans l'espace est déterminable précisément à l'aide d'un système de mesure manuel ou automatique, par exemple des encodeursde position disposés sur les axes de la machine. Le bras mobile est déplacé dans l'espace pour amener la touche de mesure du palpeur en contact avec la pièce ou la surface à mesurer. Lors du contact une force de déflection est alors appliquée sur la touche, la sortant de sa position initiale de repos. Un capteur réagit au moindre déplacement de la touche générant un signal électrique qui est envoyé soit à l'utilisateur, sous forme de signal lumineux, soit au logiciel de contrôle de la machine qui détermine ainsi à l'aide des données du système de mesure les coordonnées du point de contact dans un référentiel donné. A ce but on utilise dans l'art antérieur des capteurs électromécaniques ou optiques ou des capteurs de déplacement basés sur des principes différents, par exemple des capteurs comprenant des jauges de contrainte.

Dans le cas d'un palpeur à déclenchement tridimensionnel, la liaison entre la touche et la partie fixe de la tête de mesure est habituellement réalisée selon le principe de la liaison de Boys, soit par exemple par trois goupilles cylindriques reposant sur six sphères de façon à définir six points de contact entre l'organe fixe et la touche. On connaît toutefois aussi des touches bi- et unidimensionnelles.

Lorsque le palpeur est utilisé pour la mesure de pièces de forme complexe, présentant des cavités et des protubérances, il est malaisé ou impossible d'amener la touche en contact avectoute la surface de la pièce sansque la partie fixe de la tête de mesure ou la tige de la touche n'interfèrent avec des éléments de la pièce à mesurer. Pour pallier à cet inconvénient, on connaît des têtes de mesure permettant d'orienter la touche de contact dans une pluralité de directions dans l'espace. En général deux axes de rotation indépendants sont requis pour couvrir l'ensemble des orientations possibles. Un instrument de ce type est décrit dans la demande de brevet européen EP0392660.

L'utilisation de ce type de dispositifs n'est toutefois pas limitée aux touchesde contact et on peut aussi lesemployer avecdes capteurs sans contact, par exemple des caméras vidéo, pour inspecter et contrôler des pièces usinées, par exemple.

De préférence les axes de rotation sont indexés, dans le sens qu'ils prévoient un nombre suffisamment grand maisfini de positions de repos prédéterminées et exactement reproductibles. Cette disposition évite de devoir calibrer à nouveau la machine à mesurer après chaque changement de l'orientation de la touche.

L'indexation des axes de rotation de la touche s'obtient par des surfaces d'indexation qui s'engagent mutuellement et définissent les positions de repos souhaitées, par exemple par une couronne de sphères dans laquelle s'engagent trois goupilles. Un exemple de ce type de mécanisme d'indexation est présenté dans la demande de brevet européen EP1443299 au nom de la demanderesse.

Pour la mesure de pièces complexes, il est souhaitable que la tête de mesure soit motorisée pour orienter la touche de palpage de façon automatique, sur commande du programme de contrôle de la machine à mesurer. A cette fin, la rotation et le verrouillage des axes de la touche sont effectués par des actuateurs électromagnétiques, par exemple des moteurs ou des servomoteurs, qui écartent les surfaces d'indexation et impriment une rotation aux axes.

Une limitation des têtes de mesure motorisées connus est que lorsque la tête est déverrouillée il est difficile de définir avec précision la position de la touche, parce que ni l'écartement entre les surfaces d'indexation ni le tempsd'exécution du verrouillage ne sont connus avec précision. Cette incertitude peut allonger le temps de réponse de la machine à mesurer et conduire à des collisions non voulues entre la touche et la pièce à mesurer.

Une autre limitation des têtes de mesure motorisées connus est que le système de déverrouillage dépend de la force de gravité, ou que leur fonctionnement peut être influencé par l'orientation de la tête de mesure. Le fonctionnement est donc problématique ou impossible lorsque la tête n'est pas orientée verticalement.

Les forces d'inertie liées à la masse de la touche de palpage peuvent aussi influencer négativement le fonctionnement de la tête de mesure, notamment si l'on utilise des touches massives et des vitesses de translation importantes.

Une limitation supplémentaire des têtes de mesure connues est que, en position déverrouillée, la distance entre les surfaces d'indexation n'est pas rigoureusement définie. Des collisions entre les billes et les goupilles d'indexation sont donc possibles lors de la rotation des axes de touches. Ce genre de collision a naturellement des conséquences négatives sur la précision de l'indexation.

Un but de la présente invention est de proposer une tête de mesure exempte des limitations des dispositifs connus, et notamment une tête de mesure dans laquelle la trajectoire de la touche est complètement maîtrisée, même lors des opérations de verrouillage et déverrouillage.

Un autre but de la présente invention est de proposer une tête de mesure indexée motorisée dans lequel l'orientation de la touche de palpage peut être modifiée pour n'importe quelle orientation de la tête de mesure.

Un autre but de la présente invention est de proposer une tête de mesure dans laquelle toute collision intempestive entre les surfaces d'indexation est impossible.

Ces buts sont atteints par le dispositif comprenant la combinaison des caractéristiques qui sont l'objet de la revendication 1.

### Brève description des dessins

La présente invention sera mieux comprise à la lecture de la description donnée à titre d'exemple et illustrée par les figures annexées qui représentent:
La figure 1, une vue d'une tête de mesure motorisé selon l'invention.
La figure 2, une coupe de la tête de mesure de l'invention en position verrouillée.
La figure 3, une coupe de la tête de mesure de l'invention en position déverrouillée.
La figure 4, un détail du mécanisme de verrouillage/déverrouillage de la tête de mesure de l'invention.
Les figures 5-8, différentes vuesde l'actuateur responsable du verrouillage et du déverrouillage selon un aspect de l'invention.
La figure 9 une vue détaillée d'un vilebrequin compris dans l'actuateur des figures 5-8.

### Mode(s) de réalisation de l'invention

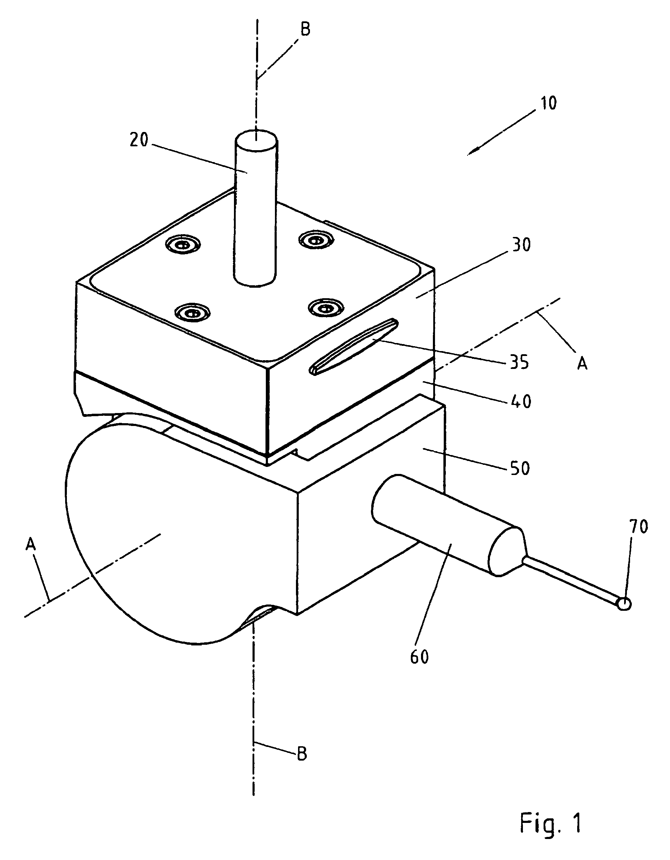

En référence à la figure 1, une tête de mesure orientable 10 selon l'invention comprend un support 30 destiné à être fixé sur le bras d'une machine à mesurer, capable de se mouvoir, par exemple selon trois axes de coordonnées X, Y et Z à l'intérieur d'un volume de mesure. La fixation peut être effectuée, par exemple, par la tige 20, ou par n'importe quel autre moyen de fixation.

Dans la suite on utilisera, par souci de simplicité, la désignation « vertical » pour se référer à l'orientation de l'axe B sur la figure 1. Cette désignation se réfère à l'orientation conventionnelle des figures et aussi à l'orientation dans laquelle le dispositif de l'invention est normalement utilisé et qui coïncide, habituellement, avec la direction de l'axe vertical Z de la machine à mesurer sur laquelle le palpeur est monté. Cependant le palpeur peut être employé avec n'importe quelle orientation dans l'espace.

Un premier élément mobile 40 est fixé au support 30, de manière à pouvoir tourner autour de l'axe vertical B. Le premier élément mobile 40 peut, de préférence, assumer une pluralité de positions indexées, correspondantes à des multiples d'un petit angle prédéterminé, par exemple 10 degrés. De manière connue ces positions indexées sont déterminéespar exemple par une liaison isostatique définissant six points d'appui entre des éléments de positionnement dont la position est déterminée avec une grande précision.

Le second élément mobile 50 est libre de tourner autour de l'axe horizontal A, solidaire du premier élément mobile 40. La rotation du second élément mobile 50 autour de l'axe A peut être continue ou indexée, motorisée ou manuelle, comme pour le premier élément mobile 40 ci-dessus.

Une touche de palpage 60 est fixée au second élément mobile 50 et porte, à son extrémité, une sphère 70 destinée à entrer en contact avec la pièce à mesurer. Un mécanisme de détection, non représenté, répond alors au moindre déplacement de la sphère 70, par rapport à la position de repos, avec un signal électrique qui est envoyé soit au voyant lumineux 35, soit au logiciel de contrôle de la machine, par un connecteur non représenté.

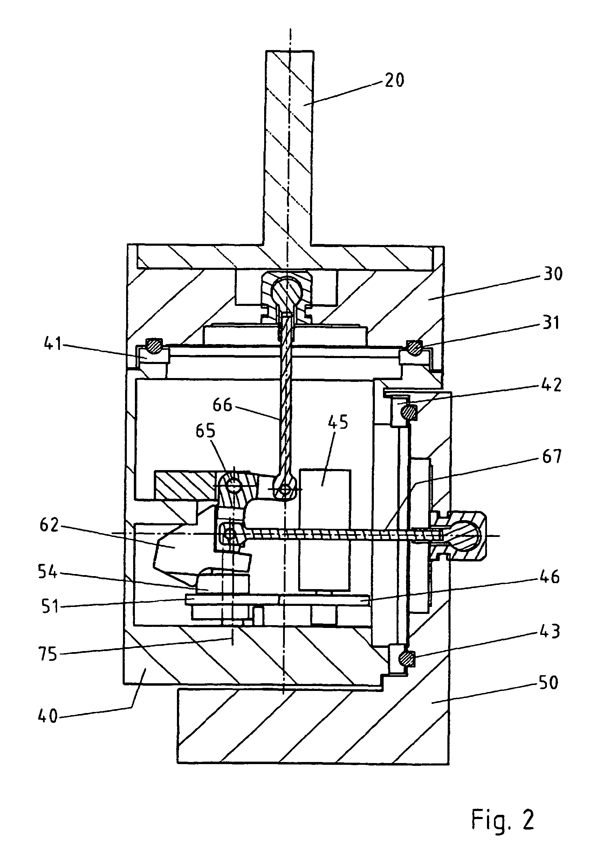

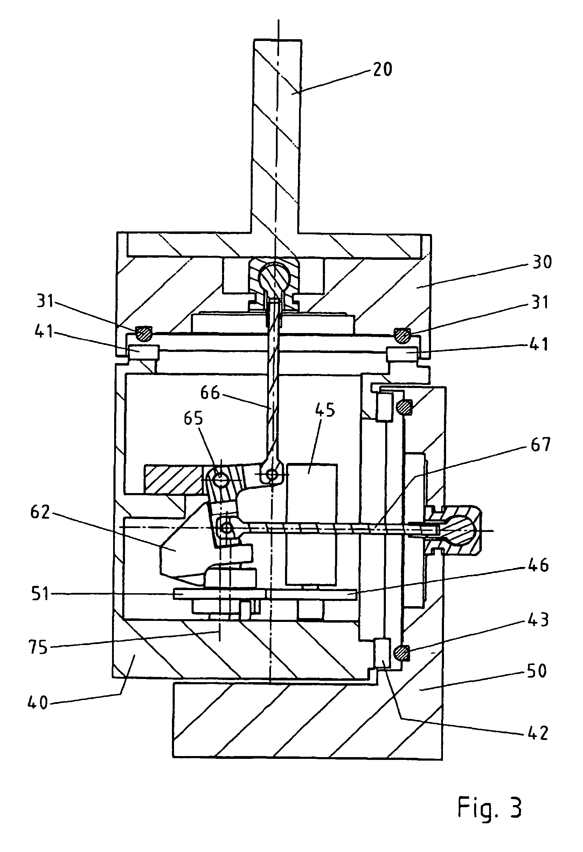

Le mécanisme de verrouillage et déverrouillage des axes selon un aspect de l'invention est maintenant décrit avec référence aux figures2 et 3.

Le support 30 porte une série de billes 31 disposées selon une circonférence avec un écartement angulaire habituellement constant, par exemple de 10° de manière à définir une série de position indexées habituellement régulièrement espacées. Le premier élément mobile 40 porte, en correspondance des billes 31, trois goupilles 41 écartées de 120° engageables avec les billes 31. En position verrouillée (figure 2), le premier élément mobile 40 est amené, par la traction de la tige 66, contre l'élément fixe 30. Chacune des goupilles 41 touche alors deux billes 31 adjacentesde manière à avoir une liaison isostatique entre l'élément de support 30 et l'élément mobile 40, selon le principe de la liaison de Boys.

De manière équivalente, dans le cadre de la présente invention, il serait possible d'échanger la position desbilleset des goupilles, en disposant les premières sur l'élément mobile et les secondes sur l'élément de support. On pourrait aussi remplacer les billes et les goupilles par d'autres éléments de positionnement aptesà définir six pointsde contact entre l'élément de support 30 et l'élément mobile 40.

Une extrémité de la tige verticale 66 est fixée de manière articulée à l'élément de support 30, tandis que l'autre extrémité de la tige 66 est fixée de manière articulée à un bras du levier 62, pouvant pivoter autour de l'axe 65, fixe par rapport au premier élément mobile 40. Préférablement, la tige 66 est alignée avec l'axe de rotation B.

Dans l'état verrouillé de la figure 2, la tige 66 est en tension et tire vers le haut le premier élément mobile 30 de manière à ce que les goupilles d'indexation 41 s'engagent avec les billes 31 du support 30. Dans cet état, toute rotation autour de l'axe B est impossible et l'élément mobile 40 est bloqué dans une des positions indexées.

La force exercée par la tige 66 est appliquée centralement par rapport aux points de contact entre les billes 31 et le goupilles 41, et est orientée selon l'axe B. De cette manière, on obtient une répartition égale des forces de contact entre les billes 31 et le goupilles 41, pour une précision d'indexation maximale.

Le second élément mobile 50 est aussi maintenu contre le premier élément mobile 40 par la tension de la tige horizontale 67, alignée avec l'axe A. La tige 67 est articulée d'une part par rapport à l'élément mobile 50 et d'autre part par rapport au levier 62.

Un second jeu de billes 43 et de goupilles 42, disposées entre les premier et second éléments mobiles permet de bloquer la rotation du second élément mobile 50 dans une position indexée.

Optionnellement, les tiges 66 et 67 comprennent des éléments élastiques non représentés, par exemple des ressorts métalliques, pour assurer une force d'indexation constante entre les goupilles 41, 42 et les billes 31, 43. De manière équivalente, des éléments élastiques pourraient être inclusdansle levier 62 ou dans les premier et second éléments mobiles.

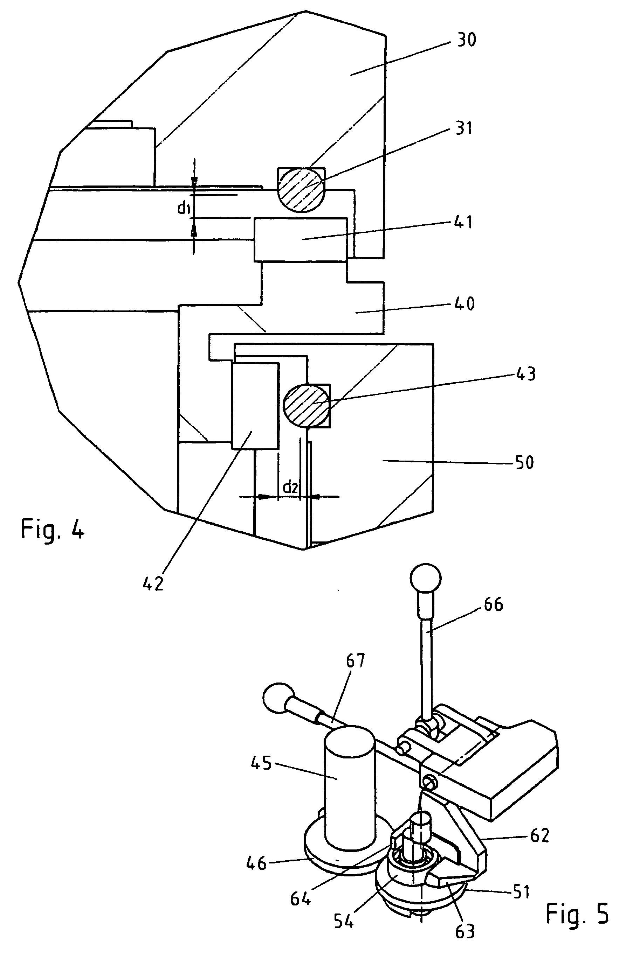

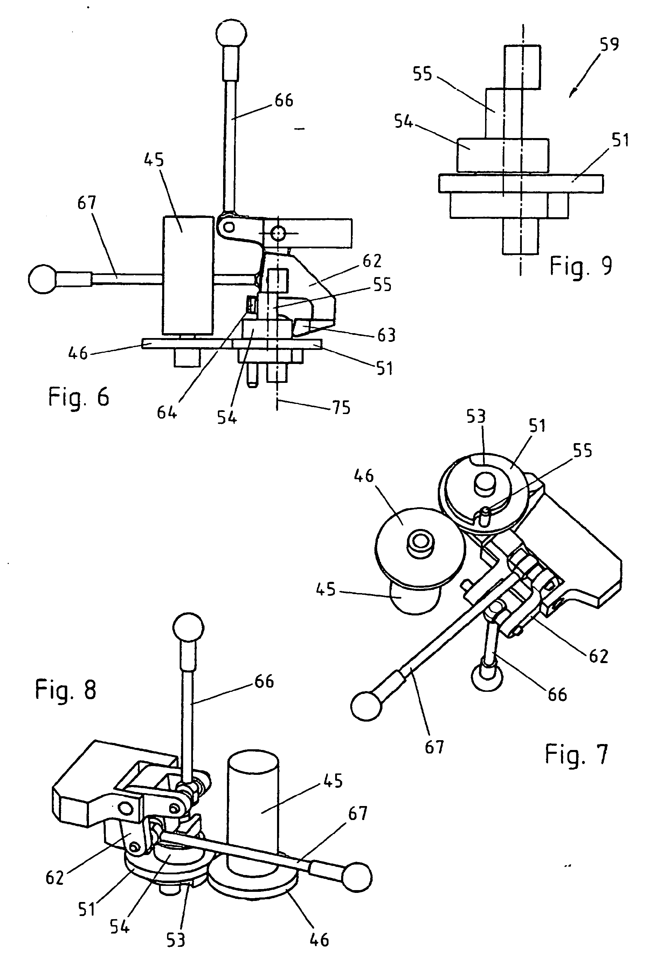

En référence aux figures 5-9, la positon du levier 62 est déterminée par le vilebrequin 59, représenté en détail sur la figure 9, entraîné en rotation autour de l'axe 75 par le moteur électrique 45 et les roues dentées 46, 51. De manière équivalente le vilebrequin 59 pourrait être entraîné directement par un moteur disposé sur le même axe 75 du vilebrequin 59 ou par n'importe quelle transmission mécanique, par exemple par un système de poulies.

Un bras du levier 62 comporte une fourche dont les deux brins 63 et 64 contactent les deux cotés opposés du maneton 55 du vilebrequin 59, de manière à déplacer le levier 62 de la position verrouillée à la position déverrouillée, lorsque le vilebrequin 59 tourne de 180°. Optionnellement un roulement à billes est interposé entre le maneton 55 et la fourche, pour réduire les frottements lors du verrouillage et/ou du déverrouillage. Dans l'exemple illustré sur les figures, un roulement 54 est prévu seulement en correspondance du brin 63, qui transmet la force de verrouillage. En correspondance de l'autre brin 64 de la fourche, responsable du déverrouillage, les efforts requis son plus modestes et on peut employer un simple palier antifriction.

La rotation du vilebrequin 59 autour de l'axe 75 est limitée à un angle de rotation légèrement supérieur à 180° par le secteur 53 et la goupille 55, solidaire du premier élément mobile 30. Les positions de butée de la goupille 55 contre les extrémités du secteur 53 sont disposées de manière à dépasser les points d'équilibre et donc à définir des positions de repos stables correspondent respectivement à l'état verrouillé et à l'état déverrouillé.

Les figures 3 et 4 représentent la tête de mesure selon l'invention dansson état déverrouillé. Dansce cas, le levier 62 est incliné et les tiges 66 et 67 poussent sur l'élément de support 30, respectivement sur le second élément mobile 50, de manière à écarter les éléments d'indexation 31, 41, respectivement 42, 43 d'une distance prédéterminée d1, respectivement d2.

Dans une variante d'exécution, les tiges 66 et 67 pourraient être entraînées par un ensemble pignon/crémaillère.

L'écartement et la fermeture des surfaces d'indexation a lieu grâce à la double action des tiges 66 et 67, qui est indépendante de la direction de la force poids et des forces d'inertie, et sans l'intervention de ressorts ou d'éléments élastiques. Le mécanisme de l'invention peut donc assurer un fonctionnement fiable et rapide quelle que soit l'orientation de la tête de mesure.

Dans la position déverrouillée, la rotation autour des deux axes A et B est assurée par des servomoteurs non représentés, contrôlés par le logiciel de la machine à mesurer, ou par d'autres actuateurs automatiques équivalents.

Le mode de réalisation décrit ici comporte un seul actuateur pour verrouiller et déverrouiller les deux axes A et B simultanément. L'invention comprend toutefois aussi des variantes dans les quelles chaque axe de rotation est verrouillé et déverrouillé par un actuateur indépendant.

Dans une variante d'exécution, la tête de mesure de l'invention ne comporte qu'un seul axe de rotation, par exemple un axe horizontal A.

## Revendications

1. Tête de mesure orientable (10) pour orienter une touche de palpage (6) relativement à un appareil de mesure, comprenant :
un élément de support (30) ;
un premier élément mobile (40) connecté audit élément de support (30) et pouvant tourner autour d'un premier axe (B) relativement audit élément de support (30) ;
un actuateur automatique, pouvant prendre un état verrouillé et un état déverrouillé;
dans lequel ledit actuateur automatique est agencé pour exercer :
- une force de déverrouillage sur ledit premier élément mobile (40) pour écarter ledit premier élément mobile (40) dudit élément de support (30) et permettre la rotation autour dudit premier axe (B) lorsque ledit actuateur se trouve dans l'état déverrouillé;
- une force de verrouillage sur ledit premier élément mobile (40) pour resserrer ledit premier élément mobile (40) contre l'élément de support (30) et interdire la rotation autour dudit premier axe (B) lorsque ledit actuateur se trouve dans l'état verrouillé,
**caractérisé en ce que**
la tête de mesure (10) comprend un élément rigide (66) dont une extrémité est fixée de manière articulée audit élément de support (30) et l'autre extrémité est fixée de manière articulée audit actuateur automatique pour transmettre ladite force de verrouillage et ladite force de déverrouillage.

2. Tête de mesure selon la revendication précédente, comprenant :
une pluralité d'éléments de positionnement mobiles (41) solidaires dudit premier élément mobile (40) ;
une pluralité d'éléments de positionnement fixes (31) solidaires dudit élément de support (30) et engageables avec lesdits éléments de positionnement mobiles (41), pour définir une pluralité d'orientations prédéterminées dudit premier élément mobile (40) relativement audit élément de support (30).

3. Tête de mesure selon l'une des revendications précédentes dans laquelle ledit premier élément mobile (40) et ledit élément de support (30) sont écartés d'une distance prédéterminée (d2) lorsque ledit actuateur se trouve en l'état déverrouillé.

4. Tête de mesure selon l'une des revendications précédentes dans laquelle ledit élément rigide (66) est une tige rigide.

5. Tête de mesure selon l'une des revendications précédentes, dans laquelle ledit actuateur automatique comprend un moteur électrique (45).

6. Tête de mesure selon la revendication 1, dans laquelle ledit élément rigide est arrangé pour tirer sur ledit premier élément mobile (40) lorsque ledit actuateur se trouve en l'état verrouillée et pour pousser sur ledit premier élément mobile (40) lorsque ledit actuateur se trouve en l'état déverrouillé.

7. Tête de mesure selon la revendication 1, dans laquelle ledit actuateur automatique comprend un moteur électrique (45) et un levier (62) dont un bras est articulé avec une extrémité dudit élément rigide (66) et dans lequel ledit moteur (45) agit sur une came (54, 55) pour faire osciller ledit levier entre une position verrouillée et une position déverrouillée.

8. Tête de mesure selon l'une des revendications précédentes, dans laquelle le verrouillage et le déverrouillage sont indépendants de l'orientation par rapport à la force de gravité.

9. Tête de mesure selon l'une des revendications précédentes, comprenant un actuateur de rotation pour tourner ledit premier élément mobile (40) par rapport à l'élément de support (30) lorsque l'actuateur automatique se trouve en position déverrouillée.

10. Tête de mesure selon l'une des revendications précédentes comprenant :
un second élément mobile (50) connecté audit premier élément mobile (40) de manière à pouvoir tourner autour d'un second axe (A) relativement audit premier élément mobile;
dans lequel ledit actuateur automatique est agencé pour exercer :
une force de déverrouillage sur ledit second élément mobile (50) pour écarter ledit second élément mobile (50) dudit premier élément mobile (40) et permettre la rotation autour dudit second axe (A) lorsque ledit actuateur se trouve dans l'état déverrouillé;
- une force de verrouillage pour engager le second élément mobile (50) avec le premier élément mobile (40) lorsque ledit actuateur se trouve dans l'état verrouillé.

11. Tête de mesure selon la revendication 10, comprenant une première tige rigide (66) dont une extrémité est fixée de manière articulée audit élément de support (30) et l'autre extrémité est fixée de manière articulée audit actuateur automatique et une seconde tige rigide (67) dont une extrémité est fixée de manière articulée audit second élément mobile (50) et l'autre extrémité est fixée de manière articulée audit actuateur automatique, et dans lequel ledit actuateur automatique comprend un moteur électrique (45) et un levier (62) dont un bras est articulé avec une extrémité de lesdites tiges rigides et dans lequel ledit moteur (45) agit sur une came (54, 55) pour faire osciller ledit levier entre une position verrouillée et une position déverrouillée.

12. Tête de mesure selon la revendication 10 dans laquelle lesdites première tige (66) et seconde tige (67) sont essentiellement orthogonales et alignées avec le premier axe de rotation (B), respectivement avec le second axe de rotation (A).

13. Tête de mesure selon la revendication 10, comprenant un actuateur de rotation pour tourner ledit premier élément mobile lorsque l'actuateur automatique se trouve dans l'état déverrouillé.

## Claims

1. Re-orientable measuring head (10) for orienting a prpbe feeler (6) relative to a measuring apparatus, including:
a support element (30) ;
a first mobile element (40) connected to said support element and capable of turning around a first axis (B) relative to said support element (30);
an automatic actuator capable of being in a locked state and in an unlocked state;
wherein said automatic actuator is arranged to exert:
- an unlocking force onto said first mobile element (40) to move said first mobile element (40) away from said support element (30) and allow the rotation around said first axis (B) when said actuator is in the unlocked state;
- a locking force onto said first mobile element (40) to tighten said first mobile element (40) against said support element (30) and prevent the rotation around said first axis (B) when said actuator is in the locked state,
**characterized in that**,
the measuring head (10) includes a rigid element (66) whose one extremity is fastened in an articulated manner to said first support element (30) and whose other extremity is fastened in an articulated manner to said automatic actuator to transmit said locking force and said unlocking force.

2. Measuring head according to the preceding claim, including:
a plurality of mobile positioning elements (41) united with said first mobile element (40) ;
a plurality of fixed positioning elements (31) united with said support element (30) and capable of engaging with said mobile positioning elements (41) to define a plurality of predetermined orientations of said first mobile element (40) relative to said support element (30).

3. Measuring head according to one of the preceding claims, wherein said first mobile element (40) and said support element (30) are moved apart by a predetermined distance (d2) when said actuator is in unlocked state.

4. Measuring head according to one of the preceding claims, wherein said rigid element (66) is a rigid rod.

5. Measuring head according to one of the preceding claims, wherein said automatic actuator includes an electric motor (45).

6. Measuring head according to claim 1, wherein said rigid element is arranged for pulling on said first mobile element (40) when said actuator is in locked state and for pushing on said first mobile element (40) when said actuator is in unlocked state.

7. Measuring head according to claim 1, wherein said automatic actuator includes an electric motor (45) and a lever (62) whose one arm is articulated with one extremity of said rigid element (66) and wherein said motor (45) acts on a cam (54, 55) to make said lever oscillate between a locked position and an unlocked position.

8. Measuring head according to one of the preceding claims, wherein the locking and unlocking are independent from the orientation relative to the gravitational force.

9. Measuring head according to one of the preceding claims, including a rotation actuator for turning said first mobile element (40) relative to the support element (30) when the automatic actuator is in unlocked position.

10. Measuring head according to one of the preceding claims, including :
a second mobile element (50) connected with said first mobile element (40) so as to be capable of turning around a second axis (A) relative to said first mobile element;
wherein said automatic actuator is arranged to exert:
- an unlocking force on said second mobile element (50) to move said second mobile element (50) away from said first mobile element (40) and allow the rotation around said second axis (A) when said actuator is in the unlocked state;
- a locking force to engage the second mobile element (50) with the first mobile element (40) when said actuator is in the locked state.

11. Measuring head according to claim 10, including a first rigid rod (66) whose one extremity is fastened in articulated manner to said support element (30) and whose other extremity is fastened in an articulated manner to said automatic actuator and a second rigid rod (67) whose one extremity is fastened in articulated manner to said second mobile element (50) and whose other extremity is fastened in articulated manner to said automatic actuator, and wherein said automatic actuator comprises an electric motor (45) and a lever (62) whose one arm is articulated with one extremity of said rigid rods and wherein said motor (45) acts on a cam (54, 55) to make said lever oscillate between a locked position and an unlocked position.

12. Measuring head according to claim 11 wherein said first rod (66) and second rod (67) are orthogonal and aligned with the first rotation axis (B), respectively with the second rotation axis (A).

13. Measuring head according to claim 10, including a rotation actuator for turning said first mobile element when the automatic actuator is in unlocked state.

## Patentansprüche

1. Wiederausrichtbarer Messkopf (10) für die Ausrichtung einer Tastsonde relativ zu einer Messvorrichtung, aufweisend:
ein Halteelement (30) ;
ein erstes bewegliches Element (40) verbunden mit dem Halteelement (30) und ausgebildet sich um eine erste Achse (B) relative zu dem Halteelement (30) zu drehen;
ein automatischer Aktuator ausgebildet sich in einem geschlossenen und ein einem offenen Zustand zu befinden;
wobei dieser automatische Aktuator so ausgebildet ist folgendes auszuüben:
- eine öffnende Kraft auf das erste bewegliche Element (40) um das erste bewegliche Element (40) weg von dem Halteelement (30) zu bewegen und um die Rotation um die erste Achse (B) zu ermöglichen, wenn der Aktuator sich in dem offenen Zustand befindet;
- eine schliessende Kraft auf das erste bewegliche Element (40) um das erste bewegliche Element (40) an das Halteelement (30) anzunähern und die Rotation um die erste Achse (B) zu verhindern, wenn der Aktuator sich in dem geschlossenen Zustand befindet;
**dadurch gekennzeichnet, dass**
der Messkopf (10) ein biegesteife Element (66) aufweist, dessen eine Extremität in einer gelenkigen Weise an dem Halteelement (30) befestigt ist und dessen andere Extremität in einer beweglichen Weise an dem automatischen Aktuator befestigt ist, um die schliessende Kraft und die öffnende Kraft zu übertragen.

2. Messkopf nach dem vorigen Anspruch, aufweisend: Eine Mehrzahl von beweglichen Positionierelementen (41) verbunden mit dem ersten beweglichen Element (40);
eine Mehrzahl von festen Positionierelementen (31) verbunden mit dem Halteelement (30) und geeignet mit den beweglichen Positioniermitteln (41) verbunden zu werden um eine Mehrzahl von vorbestimmten Ausrichtungen des ersten beweglichen Elements (40) relativ zu dem Halteelement (30) zu definieren.

3. Messkopf nach,einem der vorhergehenden Ansprüche, wobei das erste bewegliche Element (40) und das Halteelement (30) sich um einen vorbestimmten Abstand (d2) entfernen, wenn der Aktuator sich in dem offenen Zustand befindet.

4. Messkopf nach einem der vorhergehenden Ansprüche, wobei das biegesteife Element (66) ein biegesteifer Stab (66) ist.

5. Messkopf nach einem der vorhergehenden Ansprüche, wobei der automatische Aktuator einen elektrischen Motor (45) aufweist.

6. Messkopf nach Anspruch 1, wobei das biegesteife Element so angeordnet ist, dass dieses zum Ziehen des ersten beweglichen Elements (40) geeignet ist, wenn der Aktuator sich in dem geschlossenen Zustand befindet und zum Drücken geeignet ist, wenn der Aktuator sich in einem offenen Zustand befindet.

7. Messkopf nach einem der vorhergehenden Ansprüche, wobei der automatische Aktuator einen elektrischen Motor (45) und einen Hebel (62), dessen ein Arm an einer Extremität des biegesteifen Elements (66) gelenkig angebracht ist, aufweist, wobei der Motor (45) auf eine Kurvenscheibe (54, 55) wirkt um den Hebel zwischen einer geschlossenen Position und einer offenen Position oszillieren zu lassen.

8. Messkopf nach einem der vorhergehenden Ansprüche, wobei das Schliessen und Öffnen unabhängig von der Ausrichtung relativ zu der Schwerkraft ist.

9. Messkopf nach einem der vorhergehenden Ansprüche aufweisend einen Rotationsaktuator zum Drehen des ersten beweglichen Elements (40) relativ zu dem Halteelement (30), wenn der automatische Aktuator sich in einer offenen Position befindet.

10. Messkopf nach einem der vorhergehenden Ansprüche, aufweisend :
ein zweites bewegliches Element (50) verbunden mit dem ersten beweglichen Element (40), so dass es geeignet ist sich relativ zu dem ersten beweglichen Element um eine zweite Achse (A) zu drehen;
wobei der automatische Aktuator so ausgebildet ist, folgendes auszuüben:
- eine öffnende Kraft auf das zweite bewegliche Element (50) um das zweite bewegliche Element (50) von dem ersten beweglichen Element (40) wegzubewegen und die Rotation um die zweite Achse (A) zu erlauben, wenn der Aktuator sich in dem offenen Zustand befindet;
- eine schliessende Kraft um das zweite bewegliche Element (50) mit dem ersten beweglichen Element (40) zu verbinden, wenn der Aktuator sich in dem geschlossenen Zustand befindet.

11. Messkopf nach Anspruch 10, aufweisend einen ersten biegesteifen Stab (66), dessen eine Extremität gelenkig an dem Halteelement (30) befestigt ist und dessen andere Extremität gelenkig an dem automatischen Aktuator befestigt ist, und ein zweiter biegesteifer Stab (67), dessen eine Extremität gelenkig an dem zweiten beweglichen Element (50) befestigt ist und dessen andere Extremität gelenkig an dem automatischen Aktuator befestigt ist, und wobei der automatische Aktuator einen elektrischen Motor (45) und einen Hebel (62), dessen ein Arm an einer Extremität der biegesteifen Stäbe gelenkig angebracht ist, aufweist, wobei der Motor (45) auf eine Kurvenscheibe (54, 55) wirkt um den Hebel zwischen einer geschlossenen Position und einer offenen Position oszillieren zu lassen.

12. Messkopf nach Anspruch 11, wobei der erste Stab (66) und der zweite Stab (67) rechtwinklig und entsprechend parallel zu der ersten Rotationsachse (B) und der zweiten Rotationsachse (A) verlaufen.

13. Messkopf nach Anspruch 10, aufweisend einen Rotationsaktuator zum Drehen des ersten beweglichen Elements, wenn der automatische Aktuator sich in einem geschlossenen Zustand befindet.
